# FASCICULE DE BREVET EUROPEEN

(11) **EP 1 302 364 B1**
(45) Date de publication et mention de la délivrance du brevet: **27.04.2005**
(21) Numéro de dépôt: 01490044.3
(22) Date de dépôt: 09.10.2001
(51) Int. Cl.: B60N 3/04, B29C 45/14

(54) **Procédé de fabrication de tapis de sol pour véhicule automobile, moule d'injection pour la mise en oeuvre du procédé et tapis de sol ainsi obtenu**
Verfahren zur Herstellung von Bodenmatten für Automobile, Spritzgiessform für die Durchführung des Verfahrens und so hergestellte Bodenmatte
Process for making floor mats for automobiles, injection mould for carrying out that process and resulting floor mat

(43) Date de publication de la demande: 16.04.2003
(73) Titulaire: HV Developpement, SARL, 59117 Wervicq Sud (FR)
(72) Inventeur: Van Respaille, Hervé, 59910 Bondues (FR)
(74) Mandataire: Hennion, Jean-Claude

(56) Documents cités:
- WO-A-98/17461
- DE-U- 20 013 554
- US-A- 4 491 556
- US-A- 5 316 817

## Description

L'invention se rapporte au domaine technique des tapis de sol pour planchers de véhicules, notamment de véhicules automobiles.

Par « plancher » on désigne ici la partie inférieure de la carrosserie, renforcée par exemple par des nervures et des traverses en caisson, sur laquelle seront fixés les sièges et reposeront les pieds des passagers.

Conventionnellement, les constructeurs automobiles recouvrent les planchers des véhicules d'éléments de moquette découpés et collés selon les dimensions et les reliefs de ces planchers. Ce revêtement pose quelques problèmes pour son entretien, du fait que les éléments de tapis ne peuvent, le plus souvent, être démontés. Par ailleurs, la moquette utilisée par les constructeurs sur les voitures de grande série est, souvent, de la moquette à poil ras, de qualité assez médiocre, dont la couleur n'est pas toujours en harmonie avec la couleur des housses des sièges, du capitonnage, voire de la carrosserie elle-même.

Pour pallier ces difficultés, et pour laisser aux propriétaires de voitures le choix d'agencer l'intérieur de leur véhicule comme ils l'entendent, certains fabricants d'accessoires mettent à la disposition des automobilistes des éléments de tapis amovibles, destinés à être placés sur les éléments de tapis d'origine.

Ainsi, il est de plus en plus courant d'habiller et protéger le plancher intérieur d'une automobile, au niveau du conducteur et des passagers, à l'aide de tapis de type moquette, en aiguilletés de polypropylène ou polyamide ou polyester. En effet, ces derniers se sont substitués aux traditionnels tapis caoutchoutés pour leur confort et pour augmenter les qualités esthétiques de l'intérieur.

Des exemples de tapis pour aménagement de véhicules peuvent être trouvés dans les documents suivants :
- demandes de brevet français publiées sous les numéros 2 531 991, 2 535 277, 2 617 102, 2 641 747, 2 647 729, 2 672 019, 2 688 674, 2 688 742, 2 678 225, 2 690 115, 2 694 248, 2 708 533, 2 715 615, 2 754 222, 2 754 499, 2 772 321 ;
- brevets et modèles d'utilité allemand publiés sous les numéros 19814868, 4212502, 4142102, 4141023 ;
- demandes de brevet anglais publiées sous les numéros 2 118 035, 2 171 901, 2 171 902 ;
- demandes de brevet européen publiées sous les numéros 28 715, 57 391, 177 664, 112 795, 203 677, 247 677, 258 162, 259 795, 309 777, 311 736, 343 271, 379 630, 512 904, 518 014, 560 557, 594 925, 718 148, 776 761, 829 391, 834 423 ;
- brevets délivrés aux Etats-Unis sous les numéros 1 883 737, 2 505 554, 3 337 258, 4 068 339, 4 349 594, 4 382 986, 4 406 492, 4 481 240, 4 673 603, 4 721 641, 5 236 241,5 725 926 ;
- demandes internationales de brevet publiées sous les numéros 90/09906, 91/02665, 91/16218, 93/08040, 93/13254, 97/06029, 98/19880.

Les tapis d'appoint habillant l'intérieur de la caisse de véhicules automobiles, connus dans l'art antérieur, peuvent être rangés dans les quatre catégories suivantes :
- tapis brosse, à savoir structure textile enduite d'une résine synthétique sur sa face d'envers, la structure textile constituant la face d'endroit du tapis. Ce type de tapis est de conception ancienne (voir document BE 344 323 par exemple) ;
- structure en résine synthétique moulée (élastomère, caoutchouc...), ce type de tapis étant également de conception très ancienne (cf. document FR 541 419 par exemple) ;
- moquette aiguilletée ou velours, par exemple morceaux de moquette en polypropylène, bordés d'un galon en fibre textile ;
- structure en résine synthétique moulée ou caoutchouc naturel sur laquelle est rapportée de la moquette, par collage.

Les tapis habillant l'intérieur de la caisse doivent présenter de nombreuses qualités :
- ils doivent être flexibles pour épouser les formes gauches du plancher, ces formes gauches étant liées notamment aux passages de roues, à la console centrale entre les sièges avant, au tunnel de transmission, aux zones repose-pied ;
- ils doivent pouvoir être employés sur des véhicules de marques et modèles différents, et ceci en dépit des différences de conformation en trois dimensions des planchers de ces véhicules. Cette possibilité d'emploi dans plusieurs types de véhicules n'est obtenue actuellement qu'au prix d'une réduction de la surface des tapis ;
- ils doivent présenter une grande résistance à l'usure par frottement et poinçonnement, notamment dans les zones d'appui du talon du conducteur. Ce poinçonnement est particulièrement marqué lorsque le conducteur est une femme portant des chaussures à talons ;
- ils doivent être esthétiques et aussi personnalisés que possible ;
- ils doivent pouvoir être maintenus en position et ne pas glisser sur le plancher ou former des plis, en particulier lorsque le conducteur effectue une manoeuvre d'urgence (freinage). Ils ne doivent pas laisser passer, entre eux et la garniture du plancher (en général une moquette collée) des fragments durs qui s'incrustent dans la sous-couche du tapis et altèrent le confort de l'utilisateur. Dans le même temps, ils doivent pouvoir être facilement enlevés et pas trop lourds pour être facilement secoués de sorte à en chasser les graviers et particules de terre ou de sable qui sont amenés par les chaussures des utilisateurs du véhicule ;
- ils doivent présenter une rugosité de surface telle que le pied du conducteur ne puisse glisser de son point d'appui lorsqu'il est engagé sur une pédale, et cette rugosité (nervures, reliefs...) ne doit pas entraîner le dépôt de particules ou gravillons se comportant comme un matériau abrasif entraînant l'usure d'une partie de la chaussure du conducteur ;
- ils doivent être confortables, imputrescibles et faciles à nettoyer ;
- ils doivent pouvoir être présentés agréablement en linéaires de magasins, le consommateur pouvant faire facilement le choix du tapis correspondant à la fois au modèle de son véhicule et à ses goûts ;
- ils doivent employer des matériaux compatibles avec la réglementation et les normes constructeur (par exemple UPEC U3P3) ;
- ils ne doivent pas être onéreux.

Les qualités citées ci-dessus ne sont pas obtenues avec les tapis connus dans l'art antérieur et l'invention vise à y remédier.

A cette fin, l'invention se rapporte, selon un premier aspect, à un procédé de fabrication de tapis de sol pour véhicule automobile, ce procédé comprenant une étape de mise en place d'au moins une dalle de moquette au droit d'au moins une ligne d'affaiblissement du matériau thermoplastique formant la partie inférieure du tapis, de telle sorte que cette ligne d'affaiblissement apparaisse visible et comme en filigrane au travers de cette dalle de moquette.

Ces lignes en filigrane permettent l'adaptabilité par découpe du tapis, dans un grand nombre de véhicules différents, tout en préservant la parfaite cohésion des matériaux assemblés formant le tapis.

Selon diverses réalisations, le procédé présente les caractères suivants, éventuellement combinés :
- la mise en place d'au moins une dalle de moquette est réalisée par collage, après moulage du tapis ;
- la mise en place d'au moins une dalle de moquette est réalisée par surmoulage lors de l'injection du matériau thermoplastique formant la partie inférieure du tapis ;
- la dalle de moquette est à fibres choisies parmi le groupe comprenant les fibres acryliques, les fibres coton, les fibres polyamides, les fibres polyester, les fibres polypropylène, les fibres viscose ;
- la dalle de moquette comprend des fibres à d.tex de 10 ou un mélange à égale proportion de fibres à d.tex de 8,8 et de fibres à d.tex de 11 ;
- la dalle de moquette est pourvue d'une sous-couche pré-enduite (« pré-coat ») apte à assurer l'adhésion du matériau thermoplastique formant la partie inférieure du tapis ;
- la sous-couche pré-enduite est un latex caoutchouc synthétique SBR chargé en carbonate de calcium ;
- le thermoplastique formant la partie inférieure du tapis est choisi parmi le groupe comprenant les polyvinyliques, les élastomères tels que notamment caoutchouc thermoplastiques de polyesters caoutchouc thermoplastiques de polyuréthanes ;
- le thermoplastique formant la partie inférieure du tapis est un polychlorure de vinyle plastifié ;
- le thermoplastique formant la partie inférieure du tapis est un polychlorure de vinyle plastifié issu du recyclage ;
- la partie inférieure du tapis est obtenue par injection au travers d'une seule buse.

L'invention se rapporte, selon un deuxième aspect, à un moule d'injection pour la mise en oeuvre du procédé présenté ci dessus, ce moule comprenant un angle en contre-dépouille conduisant à la formation d'une gorge sur tout ou partie du pourtour de la zone à moquette surmoulée, cet angle en contre-dépouille facilitant le maintien de la dalle de moquette dans une cavité du moule. Un moule d'injection est connu par example des documents US 4 491 556 A où WO 98/17461 A.

Dans une mise en oeuvre, la cavité bordée par l'angle en contre-dépouille est placée sur le demi-moule fixe.

L'invention se rapporte, selon un troisième aspect, à un tapis de sol obtenu par la mise en oeuvre du procédé présenté ci dessus, ce tapis comprenant au moins une patte articulée, sur son contour, cette patte articulée pouvant être, le cas échéant, détachée par découpe du tapis le long d'une ligne d'affaiblissement.

Le tapis peut comporter une ou plusieurs dalles de moquette, de formes et couleurs identiques ou non.

D'autres objets et avantages de l'invention apparaîtront au cours de la description suivante de modes de réalisation, description qui va être effectuée au vu des dessins annexés, dans lesquels :
- la figure 1 est une vue de face supérieure d'un tapis selon l'invention, posé à plat, dans un premier mode de réalisation ;
- la figure 2 est une vue schématique selon le plan de coupe II-II de la figure 1 ;
- la figure 3 est une vue de détail de la partie A de la figure 2, fortement agrandie.

Dans la suite de cette description, on désigne par « ligne d'affaiblissement », toute ligne de pliage obtenue par :
- une opération de parachèvement du tapis telle que rainage, rainurage, découpe à mi-chair ;
- une zone amincie venue de matière lors du moulage du tapis.

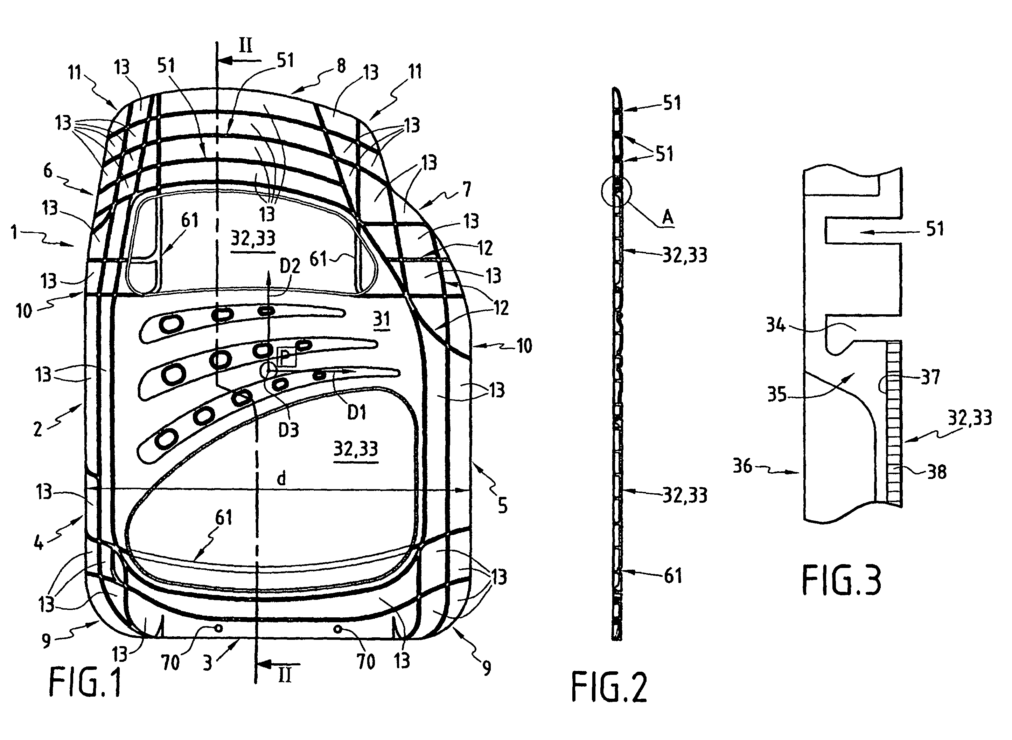

Le tapis 1 est représenté en figure 1 vu à plat, face supérieure apparente. Par « face supérieure », on désigne dans cette description la face du tapis qui est placée en regard des chaussures de l'utilisateur.

Le tapis 1 de la figure 1 est, ainsi que le reconnaîtra l'homme du métier, plus particulièrement adapté pour être placé devant un siège avant de véhicule automobile. En tout état de cause, l'homme du métier saura adapter la forme de la bordure 2 du tapis 1 en fonction du plancher du véhicule.

Dans la suite de la description de ce tapis 1, les termes « avant », « arrière », « latéral », « longitudinal », « transversal », « gauche », « droite », seront employé par rapport au point P de la figure 1 et aux directions D1 transversale et D2 longitudinale.

Les termes « épaisseur », « hauteur », seront employés en référence à la direction D3 formant trièdre direct avec les directions D1 et D2.

Le tapis 1 présente une bordure 2 inscrite dans un gabarit sensiblement rectangulaire. Plus précisément, la bordure 2 comprend :
- une première section transversale 3 sensiblement rectiligne, dite arrière ;
- deux sections dites latérales arrières 4,5, sensiblement rectilignes et perpendiculaires à la première section 3, la distance d entre les sections 4,5 formant la plus grande largeur du tapis 1 ;
- deux sections dites latérales avants 6,7, inclinées par rapport aux sections latérales arrières 4,5 ;
- une section dite transversale avant 8, sensiblement en arc de cercle.

Des congés de raccordement 9 en arc de cercle relient la première section transversale arrière 3 aux sections latérales arrières 4,5.

De même, des congés de raccordement 10 relient les sections latérales arrières et avant 4,6 ;5,7, et des congés de raccordement 11 relient la section transversale avant 8 de la bordure 2 aux sections latérales avant 6,7.

Du fait des angles formés par les sections latérales avant et arrières, la largeur du tapis décroît, d'arrière en avant du tapis 1.

Ainsi qu'il apparaîtra plus complètement par la suite, la largeur du tapis peut être modifiée par l'utilisateur, en partie avant et/ou en partie arrière de ce tapis 1.

Le tapis 1 comporte des lignes de pliage 12 qui se croisent entre elles de manière à former un réseau délimitant des pattes articulées 13.

Ces pattes articulées 13 permettent au tapis 1 d'épouser les formes du plancher de l'habitacle. Le cas échéant, l'utilisateur pourra détacher une ou plusieurs de ces pattes 13, en découpant le tapis 1 suivant les lignes d'affaiblissement 12.

Dans le mode de réalisation représenté en figure 1, chacune des pattes articulées peut être détachée par découpe le long de lignes d'affaiblissement, indépendamment les unes des autres.

Le nombre et la disposition des pattes articulées pourront être adapté par un homme du métier en fonction des formes désirées pour le tapis.

Le tapis représenté en figure 1 comprend des pattes articulées sur tout son contour. Dans d'autres modes de réalisation, non représentés, le tapis comporte des pattes articulées sur au moins un bord latéral et/ou au moins un bord transversal.

Ces pattes articulées, éventuellement détachées par découpe confèrent une grande souplesse d'utilisation au tapis qui peut ainsi épouser au mieux les formes des planchers de véhicules, sur les passages de roues ou contre le tunnel de transmission par exemple.

Par « tunnel de transmission », on désigne ici la partie centrale du plancher de l'habitacle, bombée de façon à laisser libre sous le plancher, un passage pour l'arbre de transmission, dans le cas d'un véhicule à propulsion arrière.

On désigne également ici par « tunnel de transmission » la même déformation du plancher de l'habitacle des véhicules type « tout à l'avant » ou « tout à l'arrière », cette déformation, souvent moins importante que pour les véhicules à propulsion, servant de passage pour des câbles et tuyauteries.

La surface centrale du tapis 1 comporte deux zones 32 à moquette surmoulée 33 ou collée.

La moquette 33 est surmoulée sur la matière formant la base du tapis 1.

A titre d'exemple, la moquette présente les caractères suivants :
- matière de la fibre : polypropylène ou polyester sulfone ou polyamide ;
- d.tex de la fibre : 10 ou 8,8 d.tex 50 % + 11 d.tex 50 % ;
- Densité : entre 430 et 530 g/m² environ ;
- Sous-couche « pre-coat » : latex - caoutchouc synthétique (SBR) + CaCo₃;
- Poids de la sous-couche : 600g par m² environ ;
- Densité totale de la moquette avec la sous-couche : entre 1050 et 1150 g/m² environ ;
la matière formant la base du tapis 1 étant un PVC plastifié opaque.

Avantageusement, le PVC est stabilisé à l'aide de composés de calcium et de zinc, l'emploi de stabilisants à base de plomb, toxiques, étant ainsi évité.

Dans un mode de réalisation, la matière formant la base du tapis 1 est obtenue par recyclage de thermoplastiques avec ajout d'un plastifiant tel que phtalate de 2-éthyl-héxyle (D.O.P.) pour former un compound vinylique.

Ainsi qu'il est connu en soit, les caractéristiques du PVC plastifié dépendent notamment de la nature et du pourcentage des plastifiants et charges qu'il comprend.

Dans un mode de réalisation, le PVC plastifié opaque est celui vendu sous la marque TEFANYL VEIP 63365A.

Les propriétés mécaniques de ce PVC, mesurées sur plaque injectée, sont les suivantes :

| | |
|---|---|
| - dureté SHORE A | 65 à 15 s |
| (selon ISO R 868) | 67 à 3 s |
| - masse volumique | 1,45g/cm3 |
| (selon ISO 1183) | |
| - allongement de la rupture | 300 % |
| (selon ISO R 527) | |
| - résistance à la rupture | 6,5 MPa |
| (selon ISO R 527) | |
| - contrainte à 100 % d'allongement | 4 MPa |
| (selon ISO R 527) | |
| - rigidité en torsion | - 42° C |
| (selon ISO 458) | |
| - retrait | 2 % |

Ainsi qu'il apparaît en figure 3, la moquette 33 est placée dans une zone du moule d'injection comprenant un angle en contre-dépouille.

Cet angle en contre-dépouille conduit à la formation d'une gorge 34 sur le pourtour de chacune des deux zones 32.

Par la disposition de cet angle en contre-dépouille, la moquette 33 est maintenue dans la cavité du moule et la matière 35 injectée dans le moule suivant la flèche 36 :
- vient se plaquer contre la face inférieure 37 de la moquette 33 et réagir avec le pré-coat ;
- ne peut venir recouvrir la moquette 33 en venant « baver » sur sa partie fibre 38.

Dans une réalisation, l'injection est réalisée au droit d'une seule buse située en partie arrière du tapis 1, à l'aplomb d'une zone 32 à moquette 33 surmoulée.

Dans une autre réalisation, l'injection est réalisée au droit d'au moins une buse située en partie arrière du tapis 1, à l'aplomb d'une zone 31 située entre les deux zones 32 à moquette surmoulée ou collée 33.

L'emploi d'un moule d'injection à une seule buse facilite l'utilisation de matériaux recyclés de composition et viscosités parfois hétérogènes.

Afin d'éviter les effets d'entaille et les retassures, les raccordements à angle vifs sont évités et les congés de raccordement sont à grand rayon.

De sorte à éviter le voile sur le tapis, les surfaces planes d'épaisseurs uniformes sont d'étendues réduites par la disposition de nervures.

Le tapis 1 comprend, vers l'avant, des lignes d'affaiblissement 51 en arcs de cercle concentriques, l'une de ces lignes étant dans la continuité du bord latéral avant droit 7 du tapis 1.

Des lignes d'affaiblissement 61 sont visibles au travers des zones 32 à moquette surmoulée ou collée 33, autorisant ainsi la découpe du tapis 1 dans ces zones à moquette surmoulée ou collée, pour adapter ce tapis à la conformation de l'habitacle.

La disposition de ces lignes d'affaiblissement en dessous des zones à moquette surmoulée ou collée améliore la souplesse du tapis dans ces zones 32, rendant ainsi plus progressif le changement de rigidité du tapis entre sa périphérie, pourvue de pattes articulées, et son centre à moquette surmoulée ou collée.

Les tapis selon l'invention présente une combinaison unique d'avantages, par rapport à ceux de l'art antérieur.
a) élaborés en matériau thermoplastique tel que PVC plastifié, ils sont flexibles et peuvent ainsi épouser les formes gauches des planchers de véhicules. Cette flexibilité liée au matériau employé est améliorée encore par la disposition de lignes de pliages et de pattes articulées sur les bords du tapis. Cette flexibilité est maintenue en dépit de la présence de moquette surmoulée ou collée, les lignes d'affaiblissement apparaissant au travers des zones à moquette surmoulée ou collée ;
b) pourvus de pattes articulées éventuellement découpées par l'utilisateur, ces tapis peuvent être adaptés à des véhicules de marques et modèles différents, et ceci sans réduction importante de la surface du tapis, qui couvre la plus grande partie du plancher ;
c) pourvus de zone à moquette résistante, ils ne se dégradent pas rapidement par frottement ou poinçonnement ;
d) pourvus de zone à moquette et de motifs, ils peuvent aisément être fabriqués dans les coloris et motifs coordonnés à différents habitacles ;
e) pourvus de trous 70 d'accrochage sur des plots et épousant, par leur flexibilité, la forme des planchers, ils ne sont pas sujets au glissement ou au plissement lors de l'usage, y compris en cas de manoeuvre d'urgence du conducteur ;
f) confortables et imputrescibles, ils sont relativement légers et faciles à nettoyer, leur surface étant sensiblement plane et dépourvue de cuvettes ;
g) pourvus de plots, ils peuvent facilement être maintenus suspendus à des cintres supports, et présentés agréablement en linéaires ;
h) élaborés en matériaux recyclés, ils sont peu onéreux, tout en restant conformes aux normes en vigueur.

La disposition de contre-dépouille sur les moules d'injection facilite le maintien en position de la moquette à surmouler.

Ce maintien est d'autant plus avantageux que l'injection est réalisée sur une machine horizontale conventionnelle.

## Revendications

1. Procédé de fabrication de tapis de sol pour véhicule automobile, **caractérisé en ce qu'**il comprend une étape de mise en place d'au moins une dalle de moquette (33) au droit d'au moins une ligne d'affaiblissement (61) du matériau thermoplastique formant la partie inférieure du tapis, de telle sorte que cette ligne d'affaiblissement apparaisse visible et comme en filigrane au travers de cette dalle de moquette.

2. Procédé de fabrication selon la revendication 1, **caractérisé en ce que** la mise en place d'au moins une dalle de moquette est réalisée par collage, après moulage du tapis.

3. Procédé de fabrication selon la revendication 1, carbactérisé en ce que la mise en place d'au moins une dalle de moquette est réalisée par surmoulage lors de l'injection du matériau thermoplastique formant la partie inférieure du tapis (1).

4. Procédé selon l'une quelconque des revendications 1 à 3, **caractérisé en ce que** la dalle de moquette (33) est à fibres choisies parmi le groupe comprenant les fibres acryliques, les fibres coton, les fibres polyamides, les fibres polyester, les fibres polypropylène, les fibres viscose.

5. Procédé selon l'une quelconque des revendications 1 à 4, **caractérisé en ce que** la dalle de moquette (33) comprend des fibres à d.tex de 10 ou un mélange à égale proportion de fibres à d.tex de 8,8 et de fibres à d.tex de 11.

6. Procédé selon l'une quelconque des revendications 1 à 5, **caractérisé en ce que** la dalle de moquette (33) est pourvue d'une sous-couche pré-enduite apte à assurer l'adhésion du matériau thermoplastique formant la partie inférieure du tapis.

7. Procédé selon la revendication 6, **caractérisé en ce que** la sous-couche pré-enduite est un latex caoutchouc synthétique SBR chargé en carbonate de calcium.

8. Procédé selon l'une quelconque des revendications 1 à 7, **caractérisé en ce que** le thermoplastique formant la partie inférieure du tapis est choisi parmi le groupe comprenant les polyvinyliques, les élastomères tels que notamment caoutchouc thermoplastiques de polyesters caoutchouc thermoplastiques de polyuréthanes.

9. Procédé selon la revendication 8, **caractérisé en ce que** le thermoplastique formant la partie inférieure du tapis est un polychlorure de vinyle plastifié.

10. Procédé selon la revendication 9, **caractérisé en ce que** le thermoplastique formant la partie inférieure du tapis est un polychlorure de vinyle plastifié issu du recyclage.

11. Procédé selon l'une quelconque des revendications 1 à 10, **caractérisé en ce que** la partie inférieure du tapis est obtenue par injection au travers d'une seule buse.

12. Moule d'injection pour la mise en oeuvre du procédé présenté dans la revendication 11, **caractérisé en ce qu'**il comprend un angle en contre-dépouille conduisant à la formation d'une gorge (34) sur tout ou partie du pourtour de la zone à moquette surmoulée, cet angle en contre-dépouille facilitant le maintien de la dalle de moquette (33) dans une cavité du moule.

13. Moule selon la revendication 12, **caractérisé en ce que** la cavité bordée par l'angle en contre-dépouille est placée sur le demi-moule fixe.

14. Tapis de sol obtenu par la mise en oeuvre du procédé présenté dans l'une quelconque des revendications 1 à 11, **caractérisé en ce qu'**il comprend au moins une patte articulée (13), sur son contour, cette patte articulée pouvant être, le cas échéant, détachée par découpe du tapis (1) le long d'une ligne d'affaiblissement.

## Patentansprüche

1. Verfahren zum Herstellen von Bodenmatten für Kraftfahrzeuge, **dadurch gekennzeichnet, dass** es einen Schritt zum Anbringen wenigstens einer Teppichplatte (33) im rechten Winkel zu wenigstens einer Schwächungslinie (61) des den unteren Teil der Matte bildenden thermoplastischen Materials umfasst, so dass diese Schwächungslinie sichtbar und wie aus Filigran durch diese Teppichplatte zum Vorschein kommt.

2. Herstellungsverfahren nach Anspruch 1, **dadurch gekennzeichnet, dass** das Anbringen von wenigstens einer Teppichplatte nach dem Formen der Matte durch Kleben vollzogen wird.

3. Herstellungsverfahren nach Anspruch 1, **dadurch gekennzeichnet, dass** das Anbringen von wenigstens einer Teppichplatte durch Anformen während des Einspritzens des den unteren Teil der Matte (1) bildenden thermoplastischen Materials vollzogen wird.

4. Verfahren nach irgendeinem der Ansprüche 1 bis 3, **dadurch gekennzeichnet, dass** die Teppichplatte (33) Fasern enthält, die ausgewählt sind aus der Gruppe enthaltend Acrylfasern, Baumwollfasern, Polyamidfasern, Polyesterfasern, Polypropylenfasern, Viskosefasern.

5. Verfahren nach irgendeinem der Ansprüche 1 bis 4, **dadurch gekennzeichnet, dass** die Teppichplatte (33) Fasern mit 10 d.tex oder eine Mischung mit gleichem Anteil von Fasern mit 8,8 d.tex und von Fasern mit 11 d.tex enthält.

6. Verfahren nach irgendeinem der Ansprüche 1 bis 5, **dadurch gekennzeichnet, dass** die Teppichplatte (33) mit einer voraufgetragenen Unterschicht versehen ist, welche geeignet ist, das Haften des den unteren Teil der Matte bildenden thermoplastischen Materials sicherzustellen.

7. Verfahren nach Anspruch 6, **dadurch gekennzeichnet, dass** die voraufgetragene Unterschicht ein kalziumkarbonathaltiger SBR-Latex Synthesekautschuk ist.

8. Verfahren nach irgendeinem der Ansprüche 1 bis 7, **dadurch gekennzeichnet, dass** der den unteren Teil der Matte bildende Thermoplast ausgewählt ist aus der Gruppe enthaltend Polyvinyle, Elastomere wie insbesondere thermoplastische Polyesterkautschuke, thermoplastische Polyurethankautschuke.

9. Verfahren nach Anspruch 8, **dadurch gekennzeichnet, dass** der Thermoplast, welcher den unteren Teil der Matte bildet, ein Weich-PVC ist.

10. Verfahren nach Anspruch 9, **dadurch gekennzeichnet, dass** der den unteren Teil der Matte bildende Thermoplast ein aus Recyling hervorgegangenes Weich-PVC ist.

11. Verfahren nach irgendeinem der Ansprüche 1 bis 10, **dadurch gekennzeichnet, dass** der untere Teil der Matte durch Spritzen durch eine einzige Spritzdüse erhalten wird.

12. Spritzform zur Durchführung des in Anspruch 11 vorgestellten Verfahrens, **dadurch gekennzeichnet, dass** sie einen Hinterschneidungswinkel aufweist, welcher zur Bildung einer Auskehlung (34) über den gesamten Umfang oder einen Teil des Umfangs des Bereichs mit angeformtem Teppich führt, wobei dieser Hinterschneidungswinkel das Halten der Teppichplatte (33) in einem Hohlraum der Form erleichtert.

13. Form nach Anspruch 12, **dadurch gekennzeichnet, dass** sich der durch den Hinterschneidungswinkel eingefasste Hohlraum an der festen Formhälfte befindet.

14. Bodenmatte, welche durch Durchführung des in irgendeinem der Ansprüche 1 bis 11 vorgestellten Verfahrens erhalten wird, **dadurch gekennzeichnet, dass** sie wenigstens eine angelenkte Lasche (13) an ihrer Kontur aufweist, wobei diese angelenkte Lasche gegebenenfalls durch Zuschneiden der Matte (1) entlang einer Schwächungslinie abgetrennt werden kann.

## Claims

1. Process for making floor mats for automobiles, **characterised by** the fact that it includes a step for introducing one or more layers of carpet (33) along at least one line of reduced strength (61) in the thermoplastic material forming the lower part of the mat, so that this line of reduced strength is visible and appears as a watermark through the layer of carpet.

2. Manufacturing process as described in claim 1, **characterised by** the fact that the introduction of one or more layers of carpet is achieved by adhesion, after the moulding of the mat.

3. Manufacturing process as described in claim 1, **characterised by** the fact that the introduction of at least one layer of carpet is achieved by over-moulding during the injection moulding of the thermoplastic material forming the lower part of the mat (1).

4. Process as described in any of claims 1 to 3 whatsoever, **characterised by** the fact that the layer of carpet (33) is made of fibre selected from the group containing acrylic fibres, cotton fibres, polyamide fibres, polyester fibres polypropylene fibres and viscose fibres.

5. Process as described in any of claims 1 to 4 whatsoever, **characterised by** the fact that the layer of carpet (33) includes 10 dtex fibres or a blend of equal proportions of 8.8 dtex fibres and 11 dtex fibres.

6. Process as described in any of claims 1 to 5 whatsoever, **characterised by** the fact that the layer of carpet (33) is provided with a pre-coated under-layer suitable for ensuring that there is adhesion with the thermoplastic material forming the lower part of the mat.

7. Process as described in claim 6, **characterised by** the fact that the pre-coated under-layer is made of a calcium carbonate loaded synthetic SBR rubber latex.

8. Procedure as described in any of claims 1 to 7 whatsoever, **characterised by** the fact that the thermoplastic material forming the lower part of the mat is selected from the group containing polyvinyl, elastomers such as (in particular) thermoplastic polyester rubbers, thermoplastic polyurethane rubbers.

9. Process as described in claim 8 **characterised by** the fact that the thermoplastic material which forms the lower part of the mat is plasticized polyvinyl chloride.

10. Process as described in claim 9 **characterised by** the fact that the thermoplastic forming the lower part of the mat is plasticized polyvinyl chloride from a recycled source.

11. Process as described in any of claims 1 to 10 whatsoever, **characterised by** the fact that the lower part of the mat is produced by injection moulding through a single injection nozzle.

12. Injection mould for implementation of the process presented in claim 11, **characterised by** the fact that it includes an undercut or back draft which forms a neck (34) over all or part of the outer edge of the over-moulded carpet zone, with this undercut facilitating retention of the layer of carpet (33) in the mould cavity.

13. Mould as described in claim 12, **characterised by** the fact that the cavity with the undercut angle at its outer edge is located in the fixed half-mould.

14. Floor mat obtained by the implementation of the process presented in any of claims 1 to 11 whatsoever, **characterised by** the fact that it includes one or more jointed flaps (13), on its outline, with this jointed flap being capable, if necessary, of being detached from the mat (1) along a line of reduced strength.
